# EUROPÄISCHE PATENTANMELDUNG

(11) **EP 1 258 766 A2**
(43) Veröffentlichungstag der Anmeldung: **20.11.2002**
(21) Anmeldenummer: 02010424.6
(22) Anmeldetag: 08.05.2002
(51) Int. Cl.: G02B 21/00

(54) **Optische Messvorrichtung zur Formvermessung**

(30) Priorität: 14.05.2001 DE 10123299
(71) Anmelder: ROBERT BOSCH GMBH, 70442 Stuttgart (DE)
(72) Erfinder: Prinzhausen, Friedrich, 73732 Esslingen (DE); Lindner, Michael, 71397 Leutenbach (DE)

(57) **Zusammenfassung**

Die Erfindung bezieht sich auf eine optische Messvorrichtung (1) zur Formvermessung einer insbesondere rauhen Oberfläche eines Messobjektes (O), die eine mindestens eine Lichtquelle (LG), eine Beleuchtungsoptik, eine Messoptik und mindestens eine Detektionseinheit umfassende Einrichtung zum Bestimmen der Intensitätsverteilung einer von der Oberfläche reflektierten Messstrahlung in Abhängigkeit einer Fokuslage relativ zur Objektoberfläche aufweist. Eine einfache Messung auch an schwer zugänglichen Stellen des Messobjekts wird dadurch ermöglicht, dass die Messoptik eine optische Sonde zum Erzeugen mindestens eines Zwischenbildes (ZW) eines betrachteten Oberflächenbereichs aufweist (Fig. 1).

## Beschreibung

Die Erfindung bezieht sich auf eine optische Messvorrichtung zur Formvermessung einer insbesondere rauhen Oberfläche eines Messobjekts, die eine mindestens eine Lichtquelle, eine Beleuchtungsoptik, eine Messoptik und mindestens eine Detektionseinheit mit einem Detektionselement umfassende Einrichtung aufweist, zur Erzeugung eines Fokus auf der Oberfläche, zur Abbildung des von der Oberfläche reflektierten Fokus mittels der Messoptik auf das Detektionselement und zur Bestimmung der Intensitätsverteilung des abgebildeten Fokus auf dem Detektionselement derart, dass die Intensitätsverteilung eine Abhängigkeit aufweist von der Fokuslage der Messoptik relativ zur Oberfläche und aus der Bestimmung einer oder mehrerer unterschiedlicher Intensitätsverteilungen die Lage oder Form des betrachteten Oberflächenbereiches über eine Signalauswertung bestimmbar ist.

### Stand der Technik

Bei einer derartigen, als konfokales Mikroskop bekannten, optischen Messvorrichtung wird ein Messobjekt z.B. mit einem Lichtfleck durch ein Mikroskopobjektiv beleuchtet. Der Lichtfleck befindet sich in der Brennebene (Fokusebene) des Mikroskopobjektivs. Diese Ebene, die sogenannte Fokusebene des Mikroskopobjektivs wird wieder durch das Mikroskopobjektiv in eine Bildebene abgebildet, in der sich eine Blende (Pinhole) befindet. Hinter dieser Detektionsblende befindet sich eine Fotodiode bzw. ein Bildaufnehmer.

Zur 3D-Messung wird die Objektoberfläche in der Tiefenachse (z-Achse) durch die Fokusebene bewegt (gescant). Liegt die Objektoberfläche in der Fokusebene, so wird der Lichtfleck scharf auf die Detektionsblende abgebildet und die Fotodiode misst ein hohes Intensitätssignal. Ist die Oberfläche dagegen außerhalb der Fokusebene, ist der Lichtfleck unscharf auf die Detektionsblende abgebildet, und die Fotodiode misst ein schwaches Intensitätssignal. Um das Messobjekt zur 3D-Messung durch die Fokusebene zu bewegen, haben sich verschiedene Verfahren etabliert. Beispielsweise wird in einem kommerziellen konfokalen Mikroskop der Prüfling auf eine Piezoeinheit gelegt, der die Tiefenabtastung durchführt, oder es führen bestimmte Komponenten zusammen mit dem Mikroskopobjektiv die Tiefenabtastung durch. Bisher wird die konfokale Mikroskopie vorwiegend zur Vermessung flacher Objekte oder im biologischen Bereich eingesetzt, wie in Paddock S.W., "Confocal Laser Scanning Microscopy", Bio Techniques; Vol 27, No. 5, P. 992-1004, Nov 1999 gezeigt.

Eine weitere derartige Messvorrichtung ist als Autofokussystem ausgestaltet. Hierbei wird ähnlich wie bei dem genannten konfokalen Mikroskop das Messobjekt in dem betrachteten Bereich mit einem Lichtfleck über eine Beleuchtungsoptik und eine Messoptik beleuchtet. Die Fokusebene wird wieder über die Messoptik der Detektionseinheit zugeführt, in der eine astigmatische Optik zum Erzeugen einer Abbildung auf dem Bildaufnehmer angeordnet ist. Die Abbildung weist in Abhängigkeit von der Lage des betrachteten Bereichs relativ zur Fokusebene unterschiedliche örtliche Verteilungsmuster der Intensität auf, aus denen mit einem örtlich auflösenden Bildaufnehmer die Lage des betrachteten Bereichs bestimmbar ist. Bisher werden derartige Autofokussysteme in Kameras zur automatischen Scharfeinstellung oder als Abstandssensoren in CD-Abspielgeräten verwendet. Zum Aufbau eines Autofokussystems wird auf Naumann/Schröder: Bauelemente der Optik, Carl Hanser Verlag München Wien, 6. Aufl. S. 349 und auf Isailovic': Videodisc and optical memory systems. Prentice-Hall Inc., 1985 verwiesen.

Wird das Messobjekt mit einem Lichtfleck beleuchtet, muss es noch in xy-Richtung abgetastet (gescannt) werden. Dafür haben sich nach dem Stand der Technik ebenfalls verschiedene Techniken etabliert, z.B. Strahlumlenkung mittels Schwingspiegel, relatives Verfahren des Objektes zum Messsystem in xy-Richtung etc. Durch die Verwendung einer Nipkow-Scheibe und einer CCD-Kamera kann die Objektoberfläche ebenfalls flächenhaft gemessen werden.

Eine alternative Messvorrichtung ist als Foucault-Laser ausgebildet. Hierbei wird durch einen Laser ein paralleler Lichtstrahl erzeugt. Dieser Strahl wird über eine Optik fokussiert (Objektivoptik). Es wird im Beleuchtungslichtweg eine Blende (Foucault-Schneide) benutzt, so dass sich der Laserstrahl nicht durch die gesamte Öffnung der Objektivoptik hindurch ausbreiten kann. Das fokussierte Licht wird vom Objekt zurückreflektiert und kann nun im Detektionslichtweg durch die volle Öffnung der Objektivoptik hindurch zurück laufen. Über einen Strahlteiler, der sich zwischen der Objektivoptik und der Foucault-Schneide befindet, wird das zurückreflektierte Licht über eine zweite Optik (Detektionsoptik) auf einen örtlich auflösenden Bildaufnehmer abgebildet. Durch die Verwendung der Foucault-Schneide im Beleuchtungslichtweg weist die Abbildung des Fokus von der Objektoberfläche in Abhängigkeit von der Lage des betrachteten Bereiches der Objektoberfläche relativ zur Fokusebene der Objektivoptik unterschiedliche Verteilungsmuster der Intensität auf. Aus dieser unterschiedlichen örtlichen Verteilung der Intensität, die mittels des Bildaufnehmers (z.B. CCD-Kamera, 4Quadranten-Diode, Differenz-Diode, etc.) festgestellt und ausgewertet wird, ist die Lage des betrachteten Bereiches der Oberfläche bestimmbar. Da das Objekt nur mit einem Lichtfleck beleuchtet wird, muss es noch In xy-Richtung abgescannt werden. Dafür haben sich nach dem Stand der Technik verschiedene Techniken etabliert (z.B, relatives Verfahren des Objekts zum Lichtstrahl, Strahlumlenkung mittels Schwingspiegel, etc.).

Sollen Messungen z.B. in engen Hohlräumen vorgenommen werden, so ergeben sich mit einem konfokalen Mikroskop Schwierigkeiten.

Im Gegensatz zu interferometrischen optischen Messvorrichtungen in engen Hohlräumen, z.B. der Weisslichtinterferometrie, bei der ein relativ aufwendiger Referenzarm mit nahezu identischen Eigenschaften wie der Objektarm aufgebaut werden muss, ist der Aufbau eines konfokalen Mikroskops einfach und kostengünstig.

Der Erfindung liegt die Aufgabe zugrunde, eine optische Messvorrichtung der eingangs angegebenen Art bereit zu stellen, mit der auch an schlecht zugänglichen Stellen eines Messobjekts, z.B. in engen Hohlräumen, Oberflächenmessungen vorgenommen werden können.

### Vorteile der Erfindung

Diese Aufgabe wird mit den Merkmalen des Anspruchs 1 gelöst. Hiernach ist vorgesehen, dass die Messoptik eine optische Sonde zum Erzeugen mindestens eines Zwischenbildes (ZW) eines betrachteten Oberflächenbereichs aufweist.

Durch diese Konstruktion der Messvorrichtung mit der die Zwischenabbildungsvorrichtung aufweisenden optischen Sonde können auch z.B. in engen Hohlräumen bzw. Kanälen Messaufgaben quantitativ, zerstörungsfrei, schnell, hoch auflösend, berührungslos auf einfache Weise und kostengünstig durchgeführt werden.

Eine günstige Ausbildung besteht dabei darin, dass das Zwischenbild oder mindestens eines der Zwischenbilder im Objektstrahlengang erzeugt wird.

Alternative Konstruktionsmöglichkeiten ergeben sich dadurch, dass die optische Sonde objektseitig von einer Objektivoptik in dem reflektierten 0bjektstrahl angeordnet ist, welche als Mikroskopobjektiv ausgebildet sein kann, um z.B. eine hohe laterale Auflösung zu erhalten, oder dass die optische Sonde eine Optik aufweist, die als Mikroskopobjektiv ausgebildet ist. Die erste Variante eignet sich z.B. zur Umgestaltung eines vorhandenen konfokalen Mikroskops, während die zweite Variante insbesondere zum Neuaufbau eines konfokalen Mikroskops geeignet ist.

Ein einfacher Aufbau wird weiterhin dadurch begünstigt, dass eine Beleuchtungsblende vorgesehen ist und die optische Sonde die Beleuchtungsblende in ihrer Fokusebene abbildet.

Eine einfache Erzeugung und Abtastung des Zwischenbildes ergibt sich dadurch, dass sich im Objektstrahlengang eine bezüglich des Messobjekts starre Optikeinheit befindet, der auf ihrer von dem Messobjekt abgelegenen Seite eine bezüglich des Messobjektes in Richtung ihrer optischen Achse bei der Tiefenabtastung bewegliche Optikeinheit folgt. Eine einfache Ausbildung besteht dabei darin, dass mittels der starren Optikeinheit ein zum Messobjekt starres Zwischenbild normal zur optischen Achse erzeugt wird und dass die bewegliche Optikeinheit in dem reflektierten Objektstrahl hinter dem starren Zwischenbild angeordnet und zum Abtasten desselben ausgebildet ist.

Unebene oder ungünstig orientierte Oberflächen des Messobjekts können auf einfache Weise dadurch in ein ebenes Zwischenbild umgesetzt und abgetastet werden, dass die starre Optikeinheit wellenfrontverformende Elemente aufweist.

Ein für die einfache Bedienung und sichere Funktionsfähigkeit günstiger Aufbau besteht darin, dass die starre Optikeinheit ganz oder teilweise als Endoskop ausgebildet ist.

Weiterhin ergibt sich eine günstige Ausgestaltung dadurch, dass die starre Optikeinheit Teil einer das oder ein weiteres Zwischenbild erzeugenden Optik ist.

Alternative Aufbaumöglichkeiten ergeben sich dadurch, dass die bewegliche Optikeinheit ganz oder teilweise aus optischen Elementen besteht, die in Richtung der optischen Achse beweglich sind und weiterhin dadurch, dass die bewegliche Optikeinheit ganz außerhalb oder teilweise innerhalb und außerhalb oder ganz innerhalb des Objektlichtwegs liegt.

Eine exakte Messung wird dadurch unterstützt, dass die Zwischenabbildungsvorrichtung für alle im starren Zwischenbild abgebildeten Objektpunkte den gleichen Abbildungsmaßstab besitzt und weiterhin dadurch, dass die Zwischenabbildungsvorrichtung als telezentrische Abbildungsvorrichtung in 4F-Anordnung ausgebildet ist.

Es kann ein System von konfokalen Blenden vorgesehen sein, das z.B. Lochblenden, Spaltblenden, Spaltgitter oder eine Nipkow-Scheibe aufweist. Vorteilhaft ist z.B., dass das konfokale System von Blenden eine Beleuchtungsblende und eine Detektionsblende aufweist, die an optisch konjugierten Orten des Strahlengangs einer eine Lichtquelle aufweisenden Beleuchtungseinheit und einer Detektionseinheit angeordnet sind, dass in Abhängigkeit von der Fokuslage relativ zur Oberfläche unterschiedliche örtliche Intensitätsverteilungen auf dem Detektionselement entstehen, und dass die Lage oder Form des betrachteten Oberflächenbereiches mittels einer Signalauswerteeinheit der Detektionseinheit aus den unterschiedlichen Intensitätsverteilungen bestimmbar ist.

Bei dem konfokalen System von Blenden besteht eine zusätzliche Maßnahme darin, dass die optische Sonde auch die Detektionsblende in der Fokusebene abbildet.

Die Messvorrichtung kann vorteilhaft mit einem Autofokussystem in der Weise ausgebildet sein, dass die Detektionseinheit eine astigmatische Optik zum Erzeugen einer astigmatischen Abbildung der betrachteten Objektoberfläche auf einer Empfängerfläche der Detektionseinheit aufweist, dass die astigmatische Optik, derart ausgebildet und angeordnet ist, dass in Abhängigkeit von der Fokuslage relativ zu der Objektoberfläche unterschiedliche örtliche Intensitätsverteilungen auf der Empfängerfläche entstehen, und dass die Lage oder Form des betrachteten Oberflächenbereichs mittels einer Signalauswerteeinheit der Detektionseiheit aus den unterschiedlichen örtlichen Intensitätsverteilungen bestimmbar ist.

Hierbei besteht ein für eine genaue Vermessung der Objektoberfläche günstiger Aufbau darin, dass die astigmatische Optik eine Zylinderlinse oder Toruslinse aufweist und die Empfängerfläche eine Vierquadranten-Photodiode oder ein Bildaufnehmer mit flächiger Anordnung von Bildaufnehmerelementen oder eine Bildaufnehmeranordnung aus mehreren Bildaufnehmerzeilen ist und dass die Anordnung von astigmatischer Optik und Empfängerfläche so ausgelegt ist, dass sich für eine vor dem betrachteten Oberflächenbereich liegende Fokusebene eine erste Orientierung der Intensitätsverteilung, hinter dem betrachteten Oberflachenbereich liegende Fokusebene eine zweite Orientierung der Intensitätsverteilung und in dem betrachteten Oberflächenbereich liegende Fokusebene eine ausgeglichene Intensitätsverteilung ergeben.

Die Messvorrichtung kann vorteilhaft als Foucault-Laser in einer Weise ausgebildet sein, dass der Beleuchtungslichtweg eine Blende enthält, die bewirkt, dass für die Beleuchtung des Objektes nicht der gesamte Durchmesser der Objektivoptik durchstrahlt wird, jedoch bei der Abbildung des Objektes auf den Bildaufnehmer der gesamte Durchmesser der Objektivoptik durchstrahlt wird. Die Abdeckung des Durchmessers ist dabei vorzugsweise asymmetrisch angeordnet. Weiterhin ist die Blende derart angeordnet, dass in Abhängigkeit von der Fokuslage relativ zu der Objektoberfläche unterschiedliche örtliche Intensitätsverteilungen auf der Empfängerfläche entstehen, und dass die Lage oder Form des betrachteten Oberflächenbereiches mittels einer Signalauswerteeinheit der Detektionseinheit aus den unterschiedlichen örtlichen Intensitätsverteilungen bestimmbar ist. Die Blende ist vorteilhaft als Foucault-Schneide ausgebildet.

Hierbei besteht ein für eine genaue Vermessung der Objektoberfläche günstiger Aufbau darin, dass die Empfängerfläche ein Bildaufnehmer mit flächiger Anordnung von Bildaufnehmerelementen oder eine Vierquadranten-Photodiode oder eine Differenzdiode ist und dass die Anordnung so ausgelegt ist, dass sich für eine vor dem betrachteten Oberflächenbereich liegende Fokusebene eine erste Orientierung der Intensitätsverteilung, hinter dem betrachteten Oberflächenbereich liegende Fokusebene eine zweite Orientierung der Intensitätsverteilung und in dem betrachteten Oberflächenbereich liegende Fokusebene eine ausgeglichene Intensitätsverteilung ergibt.

Die Zugänglichkeit ungünstig gelegener Messstellen wird dadurch verbessert, dass die optische Sonde mindestens zwei um eine Achse quer zur optischen Achse zueinander verschwenkbare oder quer zur optischen Achse zueinander verschiebbare und in einer Verschwenklage oder Verschiebeposition arretierbare Abschnitte aufweist.

Um mit derselben Messvorrichtung verschiedene Oberflächenbereiche zugleich vermessen zu können und auch eine Lagebeziehung zwischen den verschiedenen Oberflächenbereichen herstellen zu können, besteht eine vorteilhafte Ausbildung darin, dass die Messoptik eine Superpositionsoptik aufweist, durch die räumlich getrennte Oberflächenbereiche des Messobjekts beleuchtet werden und in ein Bildfeld einer gemeinsamen Zwischenbildebene oder in Bildfelder unterschiedlicher Zwischenbildebenen als Zwischenbilder abgebildet werden.

Verschiedene Ausgestaltungen ergeben sich dabei dadurch, dass die Superpositionsoptik aus verschiedenen einzelnen Linsensystemen besteht, die die räumlich getrennten Flächenbereiche entlang unterschiedlicher optischer Achsen und/oder unterschiedlicher optischer Weglängen in die gemeinsame Zwischenbildebene abbildet, oder dass die Superpositionsoptik eine Multifokaloptik mit einer Linse mit mehreren Brennweiten entlang einer oder mehrerer optischer Achsen aufweist, die die räumlich getrennten Flächenbereiche in die gemeinsame Zwischenbildebene abbildet.

Eine weitere günstige Ausbildung zum Vermessen verschiedenen Oberflächenbereiche besteht darin, dass mehrere Detektionseinheiten mit jeweils einer astigmatischen Optik und jeweils einem Bildaufnehmer in abgestimmter unterschiedlicher Bildebene vorgesehen sind.

Verschiedene Oberflächenbereiche können auf einfache Weise auch dadurch unterschieden und vermessen werden, dass mehrere Beleuchtungslichtwege mit mehreren Beleuchtungsblenden und/oder mit Licht unterschiedlicher Wellenlängen vorgesehen sind.

Ist vorgesehen, dass die Messoptik eine Bildebnungsoptik zum Erzeugen eines geebneten Zwischenbildes mindestens eines unebenen Oberflächenereichs aufweist, so können auch unebene Flächenbereiche einfach und genau vermessen werden. Dabei können z.B. auch umlaufende Wandbereiche eines Hohlraums oder ringförmige Flächenbereiche mit einfachen Maßnahmen dadurch vermessen werden, dass die Bildebnungsoptik als Rundsichtoptik ausgebildet ist.

Die Messung mittels Tiefenscan erfolgt in der Weise, dass zur Bestimmung der Lage und Form des betrachteten Oberflächenbereiches eine relative Änderung der Lage der Fokusebene zur Objektoberfläche in z-Richtung durchgeführt wird entweder durch eine Bewegung des Messobjektes relativ zur Messvorrichtung oder durch eine Bewegung der Objektivoptik mit der optischen Sonde relativ zur Oberfläche oder durch eine Bewegung der Objektivoptik als bewegliche Optikeinheit relativ zur Oberfläche und der optischen Sonde als starre Optikeinheit.

### Zeichnungen

Die Erfindung wird nachfolgend anhand von Ausführungsbeispielen unter Bezugnahme auf die Zeichnungen näher erläutert. Es zeigen:
- Fig. 1: eine optische Messvorrichtung mit einem konfokalen Mikroskop und einer optischen Sonde mit eingezeichneten Strahlengängen in seitlicher Ansicht,
- Fig. 2: ein weiteres Ausführungsbeispiel der optischen Messvorrichtung, mit einer anderen beweglichen Einheit zur Tiefenabtastung,
- Fig. 3: ein weiteres Ausführungsbeispiel der optischen Messvorrichtung,
- Fig. 4A und 4B: ein Ausführungsbeispiel der optischen Messvorrichtung mit einer optischen Sonde in Form eines Klapp-Endoskops in zwei verschiedenen Stellungen,
- Fig. 5a), b) und c): das in den Fig. 4A und 4B gezeigte Klapp-Endoskop in vergrößerter Ansicht von der Vorderseite, in Seitenansicht und in Seitenansicht in Klappstellung,

- Fig. 6: einen Aufbau der optischen Messvorrichtung mit einem Autofokussystem mit optischer Sonde und eingezeichneten Strahlengängen in seitlicher Ansicht, wobei als bewegte Einheit das Messobjekt dient,
- Fig. 7: ein weiteres Ausführungsbeispiel der optischen Messvorrichtung mit Autofokussystem, wobei als bewegte Einheit ein Abschnitt der Messoptik dient,
- Fig. 8: ein weiteres Ausführungsbeispiel der optischen Messvorrichtung mit Autofokussystem, bei dem ein anderer Abschnitt der Messoptik als bewegte Einheit ausgebildet ist,
- Fig. 9 bis Fig. 11: weitere Ausführungsbeispiele der optischen Messvorrichtung, wobei die Messoptik verschiedene Sonderoptiken zum Vermessen verschiedener Oberflächenbereiche aufweist,
- Fig.12A bis 12C: weitere Ausführungsbeispiele der optischen Messvorrichtung, wobei die Messoptik mehrere Strahlengänge und die Detektionseinheit mehrere Teileinheiten aufweist,
- Fig.13A bis 13C: ein weiteres Ausführungsbeispiel der optischen Messvorrichtung, wobei mehrere Messtrahlengänge mit Licht unterschiedlicher Wellenlängen gebildet werden und die Detektionseinheit mehrere Teileinheiten aufweist und
- Fig.14A und 14B: ein Ausführungsbeispiel der optischen Messvorrichtung nach dem Prinzip eines Foucault-Lasers, wobei unterschiedliche Abschnitte der Messoptik als bewegte Einheit ausgebildet sind.

### Ausführungsbeispiel

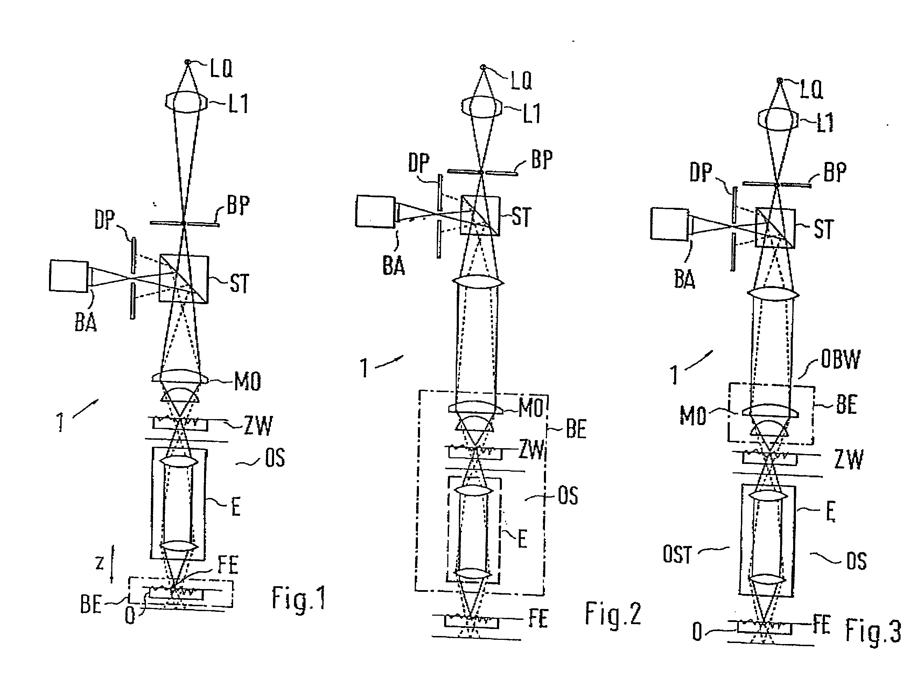

Nach Fig. 1 ist die optische Messvorrichtung 1 in einem Ausführungsbeispiel nach Art eines konfokalen Mikroskops aufgebaut, das mit einer ein Zwischenbild ZW von einem Messobjekt O erzeugenden optischen Sonde OS In Form eines Endoskops E ergänzt ist. Zur Abtastung des Messobjekts O wird dieses in Richtung der optischen Achse, d.h. in z-Richtung (Tiefenrichtung) abgetastet (gesoannt), indem das Messobjekt O in der z-Richtung bewegt wird oder indem das Endoskop E zusammen mit bestimmten Komponenten des Mikroskopobjektivs M bewegt wird, gemäß Fig. 2.

Das zugrundeliegende Messsystem ist ein konfokales Mikroskop mit einer Mikroskopoptik MO. In dem konfokalen Mikroskop werden außerhalb des Fokus im Bereich einer Fokusebene FE liegende Oberflächenstrukturen des Messobjekts O bei der Abbildung unterdrückt. Dies wird z.B. dadurch erreicht, dass nicht das ganze Messobjekt O gleichzeitig beleuchtet und abgebildet wird, sondern jeweils nur ein Punkt. Dazu dienen konfokale Blenden in Form einer in einem Beleuchtungslichtweg liegenden Beleuchtungsblende BP und einer in einem Detektionslichtweg liegenden Detektionsblende DP an optisch konjugierten Orten des Strahlengangs. Von außerhalb des Fokus stammende Lichtstrahlen werden durch die Detektionsblende DP unterdrückt.

Eine Lichtquelle LQ z.B. in Form einer kohärenten Laserdiode oder einer inkohärenten Weisslichtquelle wird z.B. mittels einer Linse L1 auf die Beleuchtungsblende BP fokussiert. Über einen Strahlteiler ST und durch das Mikroskopobjektiv MO sowie durch das Endoskop E wird das Messobjekt O mit einem Lichtfleck beleuchtet (Bild der Beleuchtungsblende BP). Der Lichtfleck befindet sich in der Fokusebene FE des Endoskops E. Die Fokusebene FE des Endoskops E wird wieder mit dem Endoskop E der optischen Sonde OS in eine Zwischenbildebene als ein Zwischenbild ZW abgebildet. Das Zwischenbild ZW wird mittels des Mikroskopobjektivs MO über den Strahlteiler ST in eine Bildebene abgebildet, in der sich die Detektionsblende DP befindet. Der Lichtfleck in der Fokusebene FE wird dadurch über das Zwischenbild ZW auf die Detektionsblende DP abgebildet, hinter der sich eine Fotodiode bzw. ein Bildaufnehmer BA z.B. einer CCD-Kamera befindet.

Zur 3D-Messung wird gemäß Fig. 1 die Objektoberfläche in der Tiefenrichtung (z-Achse) durch Bewegen der (strichpunktiert dargestellten) bewegten Einheit BE in Form des Messobjekts O abgetastet (Tiefenscan). In dem in Fig. 2 gezeigten Ausführungsbeispiel umfasst die (strichpunktiert dargestellte) bewegte Einheit (BE) Komponenten des Mikroskopobjektivs MO sowie die optische Sonde mit dem Endoskop E. Durch Bewegen der bewegten Einheit BE in z-Richtung (Tiefenrichtung) wird die Objektoberfläche abgetastet. Ist die Objektoberfläche in der Fokusebene FE, so wird der Lichtfleck über das Zwischenbild ZW scharf auf die Detektionsblende DP abgebildet, so dass der Bildaufnehmer BA ein hohes Intensitätssignal misst. Liegt die Oberfläche dagegen außerhalb der Fokusebene FE, wird der Lichtfleck unscharf auf die Detektionsebene abgebildet und der Bildaufnehmer BA misst ein schwaches Intensitätssignal. Das Intensitätssignal des Bildaufnehmers BA zeigt ein Maximum, wenn die Objektoberfläche sich in der Fokusebene FE befindet. Die Detektion des Intensitätsmaximums liefert die Tiefeninformation des Messpunktes. Zum Abtasten der gesamten zu messenden Oberfläche wird das Messobjekt noch in xy-Richtung abgetastet, wozu beispielsweise die eingangs genannten Techniken verwendet werden können.

Für die Zwischenbildabtastung besitzt das Endoskop E keine mechanisch starre Verbindung zum eigentlichen Mikroskopobjektiv MO. Gemäß dem in Fig. 3 gezeigten Ausführungsbeispiel ist die Endoskopoptik E starr mit dem Messobjekt O verbunden und erzeugt ein relativ zu dem Messobjekt O starres Zwischenbild ZW. Für die Tiefenabtastung wird das starre Zwischenbild ZW durch die Fokusebene FE des bewegten Mikroskopobjektivs MO als bewegte Einheit BE durchfokussiert und auf diese Weise analog dem tatsächlichen Messobjekt O abgetastet.

Die Endoskopoptik E ist vorzugsweise eine Optik in 4F-Anordnung mit gleichem Abbildungsmaßstab (z.B. β = 1) für alle Objektpunkte.

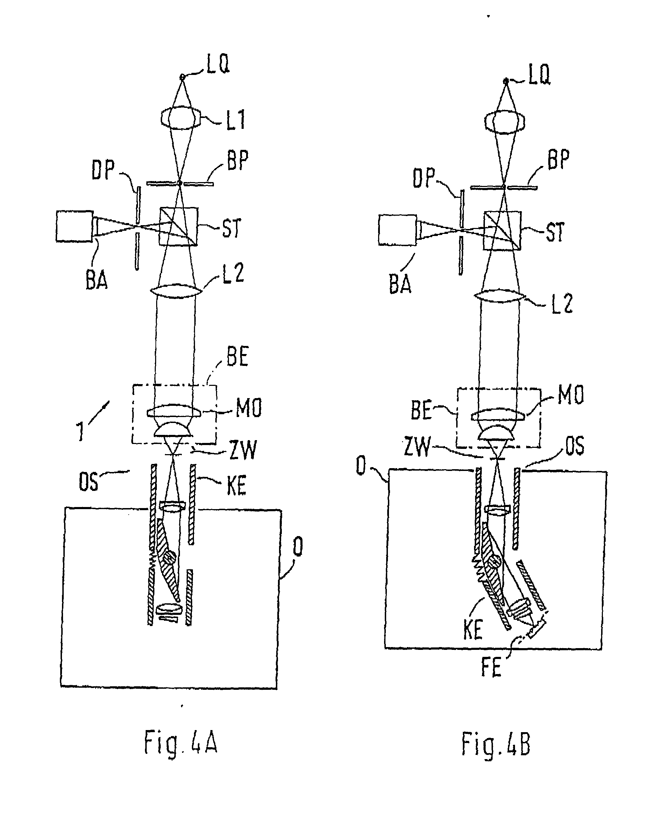

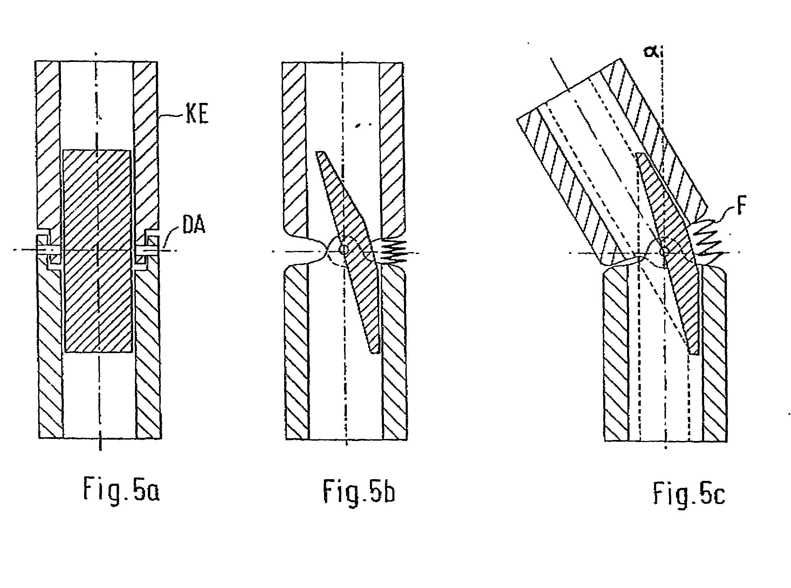

In den Fig. 4A, 4B, 5a), 5b) und 5c) ist ein weiteres Ausführungsbeispiel für die optische Messvorrichtung 1 gezeigt, wobei das Endoskop E als Klapp-Endoskop KE ausgebildet ist. Das Klapp-Endoskop KE besitzt zwei um eine senkrecht zur optischen Achse verlaufende Drehachse DA verschwenkbare Abschnitte und enthält in seinem Innern einen Ablenkspiegel, der den Strahl im Innern des Klapp-Endoskops KE entsprechend der Klappstellung ablenkt und durch die Abbildungselemente leitet. Mittels einer Feder F in Form einer Druckfeder schwenkt der in der Zeichnung untere Abschnitt des Klapp-Endoskops KE nach Durchführen durch einen schmalen Kanal in das Innere des Messobjekts O automatisch entsprechend der zu vermessenden inneren Objektoberfläche ein. Das Klapp-Endoskop KE kann dabei so ausgebildet sein, dass der Schwenkwinkel α einstellbar ist.

Die beiden Abschnitte des Klapp-Endoskops KE sind durch zwei Tuben mit entsprechend der Klappstellung zueinander gerichteten Tubusachsen realisiert und mit einem Gelenk an der Drehachse DA miteinander verbunden. Die Endoskopoptik ist auf beide Tuben verteilt (z.B. Objektivlinse in dem einen und Okularlinse in dem anderen Tubus). Die beiden Tuben sind mechanisch so gefertigt, dass die beiden Tubusachsen sowohl unter 0° (eingeklappter Zustand) als auch unter den mindestens einen festen Schwenkwinkel α (ausgeklappter Zustand) zueinander orientiert sein können. Im eingeklappten Zustand ist die Feder F gespannt, im ausgeklappten Zustand ist sie entspannt. Als optische Ablenkelemente in dem Endoskop können anstelle des Spiegels auch Prismen oder Gitter vorgesehen sein. Als Führung beim Einführen des Endoskops in das Innere des Messobjekts O kann eine Bohrung in dem Messobjekt O selbst oder aber eine eigene Führung dienen. Wie Fig. 4B zeigt, liegt das Gelenk bei eingeführtem Endoskop E im Innern des Messobjekts O frei. Im ausgeklappten Zustand wird die Objektoberfläche durch das Klapp-Endoskop KE mit dem Lichtfleck beleuchtet und dieser über das Zwischenbild ZW auf den Bildaufnehmer BA abgebildet. Durch die Abtastung des Zwischenbilds wird eine einfache Abtastung der Objektoberfläche ermöglicht.

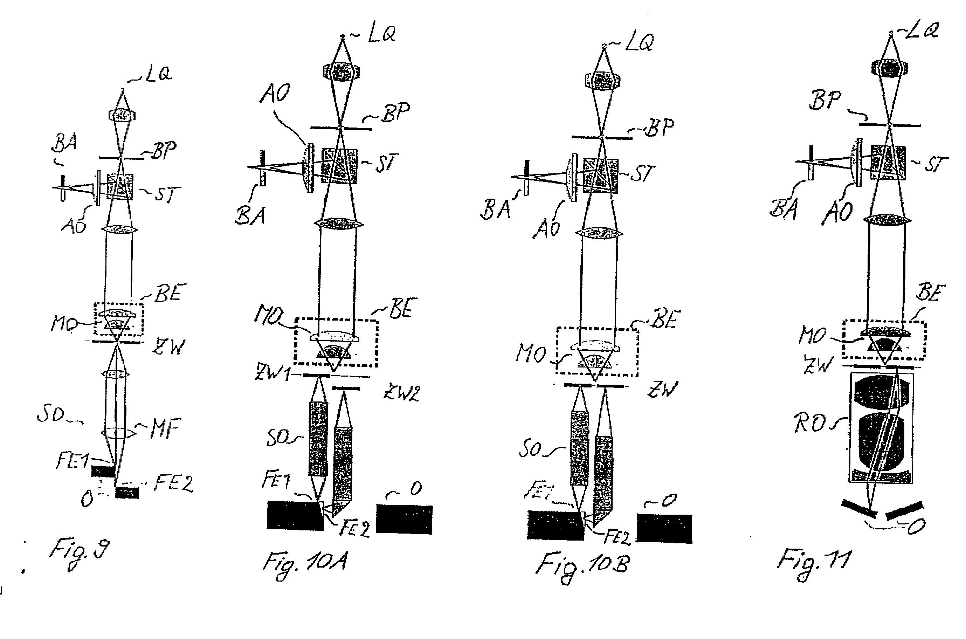

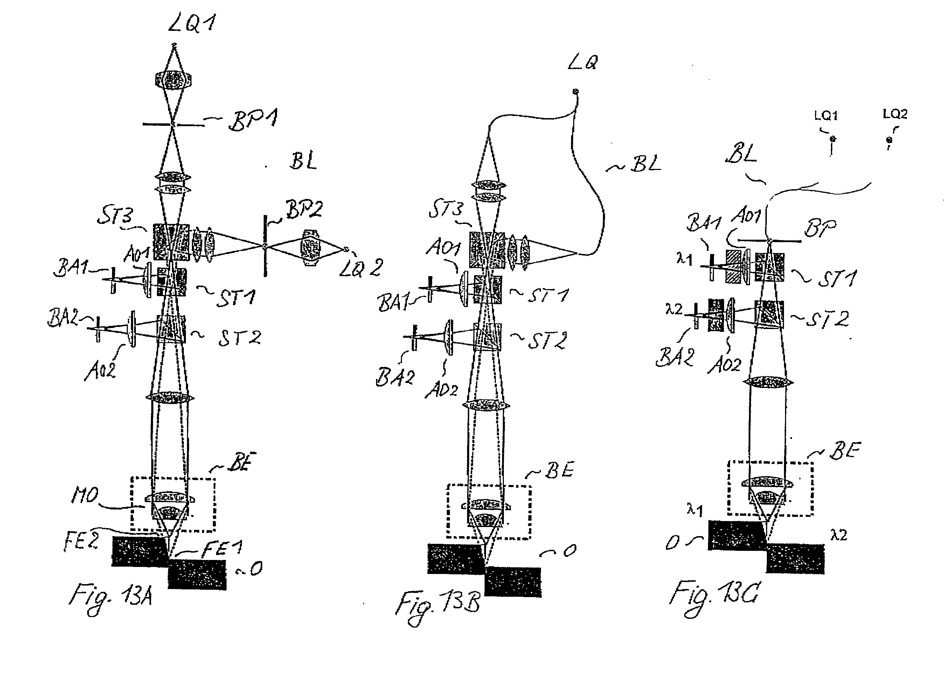

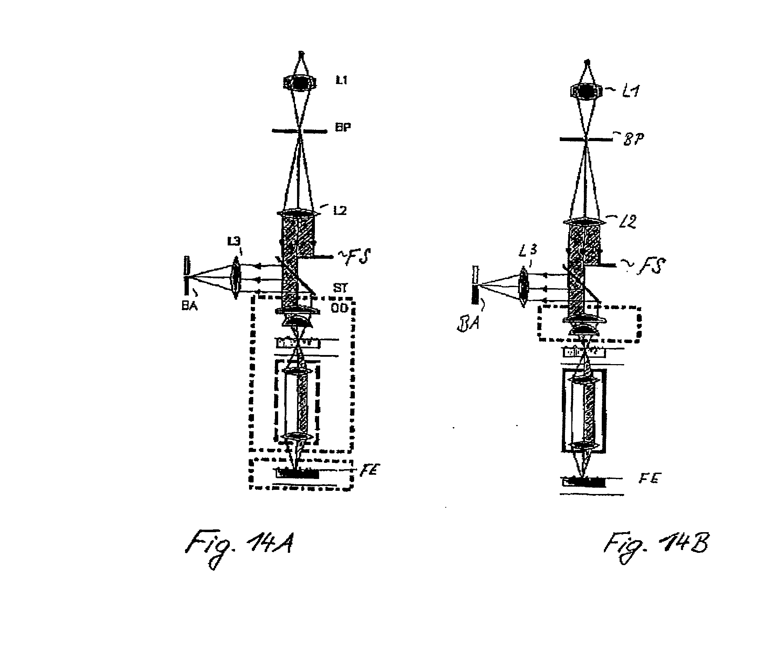

Die bisher beschriebene optische Messvorrichtung mit dem als konfokales Mikroskop ausgebildeten Messsystem kann in seiner Messoptik des Weiteren auch mit einer Sonderoptik ausgestattet sein, wie sie in den Fig. 9, 10A, 10B und 11 im Zusammenhang mit einem nachfolgend noch näher beschriebenen Autofokussystem gezeigt sind, und in weiteren Abwandlungen können auch mehrere Strahlengänge und zugeordnete Detektionseinheiten bzw. auch unterschiedliche Beleuchtungseinheiten BL eingesetzt werden, wie in den Fig. 12A bis 12C bzw. 13A bis 13C ebenfalls im Zusammenhang mit einem Autofokussystem gezeigt.

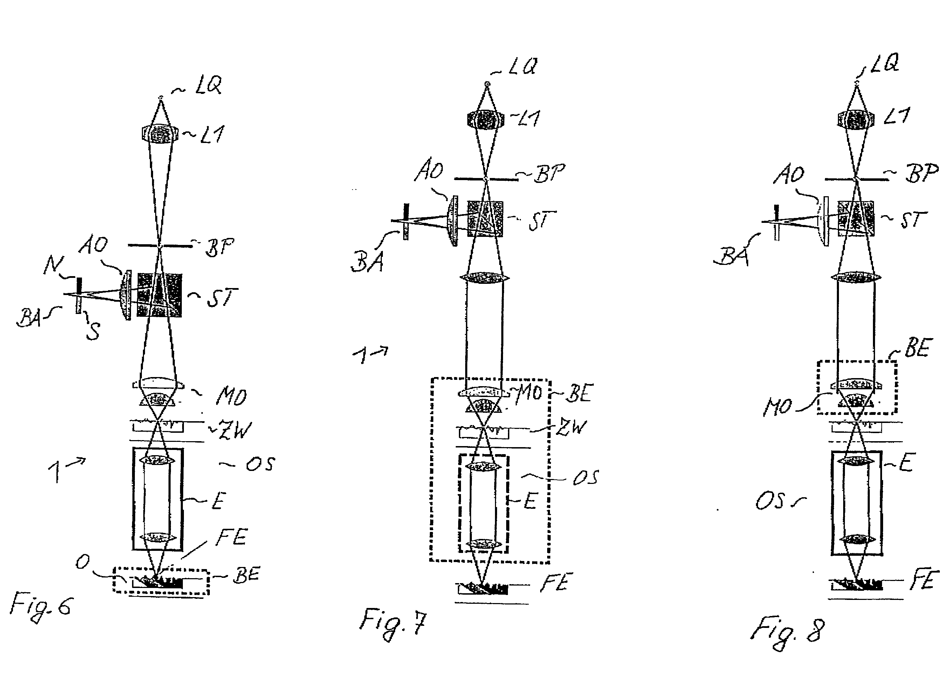

Bei dem Autofokussystem, mit dem die optische Messvorrichtung 1 gemäß den in den Fig. 6 bis 13C gezeigten Ausführungsbeispielen ausgestattet ist, ist im Gegensatz zu dem konfokalen System zwischen dem Strahlteiler FT und dem Bildaufnehmer BA eine astigmatische Optik AO angeordnet. Wie in Fig. 6 und den folgenden Figuren gezeigt, wird die betrachtete Objektoberfläche über die Beleuchtungsblende BP und die Mikroskopoptik MO punktartig beleuchtet. Die Detektion erfolgt über den Strahlteiler ST, die astigmatische Optik AO und den Bildaufnehmer BA, der mit mehreren Fotoelementen zur Flächenauflösung der auf ihm erzeugten Abbildung z.B. als Vierquadranten-Fotoempfänger CCD-Empfängeranordnung oder eine Anordnung aus mehreren Zeilen von Fotoelementen ausgebildet ist. Der Lichtfleck auf der betrachteten Objektoberfläche wird über das Mikroskopobjektiv MO, den Strahlteiler ST und die astigmatische Optik AO auf den Bildaufnehmer BA abgebildet, wobei sich zwei zueinander senkrechte Brennlinien in unterschiedlichen Distanzen von der astigmatischen Optik mit einem dazwischenliegenden Zerstreuungskreis bilden. Beispielsweise ist als astigmatische Optik AO eine Zylinderlinse oder Toruslinse vorgesehen, die so ausgelegt ist, dass für oberhalb der Fokusebene FE liegende Oberflächenbereiche vorwiegend die in Y-Richtung orientierten Fotoelemente, beispielsweise N und S einer Vierquadranten-Fotodiode, für unterhalb der Fokusebene FE liegende Oberflächenbereiche vorwíegend die in x-Richtung liegenden Fotoelemente O und W und für in der Fokusebene FE liegende Oberflächenbereiche alle Fotoelemente gleichmäßig beleuchtet werden. Die Einzelsignale können zu dem Auswertesignal N + S - O - W zusammengefasst werden, welches in der Fokusebene FE ∼ O wird.

Zur dreidimensionalen Messung wird auch hierbei die Objektoberfläche in der Tiefenachse (z-Achse) durch die Fokusebene FE gescannt. Ist der betrachtete Oberflächenbereich in der Fokusebene FE, so wird der Lichtpunkt der Oberfläche als Unschärfekreis auf den Bildaufnehmer BA bzw. die Vierquadranten-Fotodiode abgebildet, das Auswertesignal wird Null. Liegt der betrachtete Oberflächenbereich dagegen außerhalb der Fokusebene FE, wird das Auswertesignal je nach Richtung der Defokussierung positiv oder negativ.

Entsprechend den Fig. 1, 2 und 3 können zur Abtastung in Tiefenrichtung das Objekt O, der Abschnitt der Messoptik mit der optischen Sonde und der Mikroskopoptik MO oder nur die Mikroskopoptik MO bewegt werden. Beispielsweise kann das Messobjekt in Form des Prüflings auf eine Piezoanordnung gelegt und damit der Tiefenscan durchgeführt werden.

Wird das Messobjekt O mit einem Lichtfleck beleuchtet, so muss es noch in xy-Richtung abgetastet werden, wofür aus dem Stand der Technik bekannte Vorgehensweisen, z. B. eine Strahlumlenkung mittels Schwingspiegel, angewendet werden können.

Wie auch bereits im Zusammenhang mit dem konfokalen Messsystem vorstehend beschrieben, weist die Messoptik in dem Objektstrahlengang eine Optik auf, die ein Zwischenbild erzeugt. In den Fig. 6 bis 8 ist dazu eine als Endoskop E ausgebildete optische Sonde OS vorgesehen, während beispielsweise in den Fig. 9 bis 11 verschiedene Sonderoptiken gezeigt sind.

Auch bei dem Aufbau mit dem Autofokussystem kann eine Abtastung des Zwischenbilds ZW entsprechend der Beschreibung im Zusammenhang mit dem konfokalen Messsystem vorgenommen werden, wie beispielsweise die Fig. 8, 9, 10A, 10B, 11 und 12A bis 12C zeigen. Für die Zwischenbildabtastung besitzt das Endoskop E keine mechanisch starre Verbindung zu dem eigentlichen Mikroskopobjektiv MO. Dagegen kann die Endoskopoptik starr mit dem Messobjekt O verbunden sein und erzeugt dann ein relativ zu dem Objekt starres Zwischenbild, wie z.B. gemäß dem Ausführungsbeispiel nach Fig. 8. Für den Tiefenscan kann die Mikroskopoptik MO das Zwischenbild ZW durch fokussieren und die Optik des Endoskops E ist vorzugsweise eine 4F-Anordnung mit gleichem Abbildungsmaßstab (z.B. β = 1) für alle Objektpunkte.

Fig. 9 zeigt die Anordnung einer Sonderoptik SO in Form einer Superpositionsoptik, die als multifokale Optik MF, nämlich eine Bifokaloptik ausgebildet ist. Mit der Beleuchtung durch die sich im Objektstrahlengang befindende Bifokaloptik MF werden unterschiedliche, räumlich getrennte Flächen des Objekts beleuchtet. Die getrennten Oberflächenbereiche werden in ein Bildfeld abgebildet, vorteilhafterweise nahezu in eine gemeinsame Bildfläche. Es entsteht dann ein gemeinsames Bild. Das gemeinsame Bild kann direkt oder über eine oder mehrere Zwischenabbildungen (gemeinsames Zwischenbild ZW) astigmatisch in die Ebene des Bildaufnehmers BA in Form der Vierquadranten-Fotodiode abgebildet werden. Die multifokale Optik MF bzw. die Bifokaloptik weist eine Linse mit mehreren Brennweiten entlang einer oder mehrerer optischer Achsen auf. Mit weiteren Linsen kann die Multifokaloptik zu einer telezentrischen Anordnung kombiniert werden, um z.B. die gleichzeitige Aufnahme zweier nahezu paralleler Flächen, die sich übereinander befinden, zu verwirklichen. Der Tiefenscan erfolgt, wie vorstehend beschrieben.

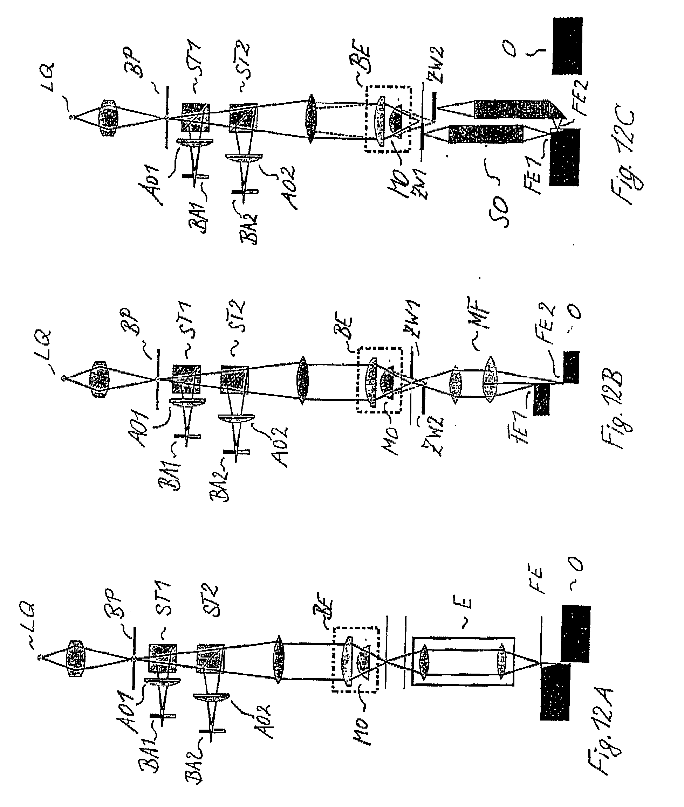

Die Superpositionsoptik kann gemäß den Fig. 10A, 10B alternativ auch aus verschiedenen einzelnen Linsensystemen bestehen, die unterschiedliche Flächen entlang unterschiedlicher optischer Achsen und mit unterschiedlichen optischen Weglängen in eine gemeinsame Zwischenbildebene ZW oder verschiedene Zwischenbildebenen ZW1, ZW2 abbilden.

Die Fig. 12A bis 12C zeigen die optische Messvorrichtung 1 mit einer aus zwei Teileinheiten gebildeten Detektionseinheit, die jeweils einen Bildaufnehmer BA1, BA2 und jeweils eine astigmatische Optik AO1, A02 aufweisen, um mehere Oberflächenbereiche gleichzeitig zu beobachten, deren Bilder in unterschiedlichen Bildebenen liegen. Die Flächen in den unterschiedlichen Bildebenen können mit den Teileinheiten gleichzeitig gemessen werden, wobei die Bildaufnehmer BA1, BA2 in unterschiedlichen Bildebenen angeordnet sind. Die unterschiedlichen Flächen können über mindestens eine Zwischenabbildung auf die Bildaufnehmer BA1, BA2 abgebildet werden. Dabei ist es vorteilhaft, wenn in jeder Bildebene jeweils ein scharfer Lichtfleck erzeugt wird. Dies kann über die Sonderoptik SO selbst erfolgen, durch die Verwendung mehrerer entsprechender Beleuchtungsblenden BP1, BP2 entsprechend Fig. 13A oder über eine Beleuchtungseinheit BL mit mehreren Lichtleitfasern gemäß Fig. 13B, wobei zum Einkoppeln des Lichts in den Messstrahlengang ein Strahlteiler ST3 und zum Auskoppeln in die Teileinheiten zu den beiden Bildaufnehmern BA1, BA2 zwei weitere Strahlteiler ST1, ST2 vorgesehen sind. Ferner kann ein scharfer Lichtfleck in jeder Bildebene auch gemäß Fig. 13C durch die Verwendung von Licht unterschiedlicher Wellenlängen erreicht werden. Der Tiefenscan erfolgt wiederum wie im Zusammenhang mit den vorhergehenden Ausführungsbeispielen beschrieben.

Eine weitere Sonderoptik SO besteht in einer Rundsichtoptik RO nach Fig. 11. Dabei ist die Rundsichtoptik zum Abtasten unebener Oberflächenbereiche als Bildebnungsoptik ausgebildet, mit der eine Abbildung in ein ebenes Zwischenbild ZW erfolgt. Auf diese Weise können insbesondere auch schräg zur optischen Achse orientierte Oberflächenbereiche in einem Hohlraum beobachtet und vermessen werden. Mit der Ausbildung als Rundsichtoptik kann z.B. ein um 360° umlaufender radialsymmetrischer Oberflächenbereich erfasst werden. Die Beleuchtung des Messobjekts O erfolgt durch die Bildebnungsoptik bzw. die Rundsichtoptik hindurch. Durch die Rundsichtoptik wird z.B. ein ringförmiger Ausschnitt (360° umlaufend) der Oberfläche abgebildet. Die Objektoberfläche kann durch die Rundsichtoptik RO in eine Ebene abgebildet werden, wobei dann das geebnete Bild entsteht. Das geebnete Zwischenbild kann direkt in die Detektionseinheit abgebildet werden oder über Zwischenabbildungen.

Auch kann das beschriebene Autofokussystem in Verbindung mit dem in den Fig. 4A bis 5C gezeigten und vorstehend beschriebenen Klappendoskop KE verwendet werden.

Das konfokale Messsystem nach den Figuren 1 bis 3 kann andererseits auch mit den in den Fig. 9 bis 13C gezeigten Sonderoptiken oder den Detektionseinheiten aus mehreren Teileinheiten, wobei dann die astigmatischen Optiken AO1, A02 durch entsprechende Detektionsblenden ersetzt werden, oder auch in Verbindung mit mehreren Beleuchtungswegen oder Licht unterschiedlicher Wellenlängen λ1, λ2 eingesetzt werden.

Bei der Messvorrichtung nach dem Prinzip des Foucault-Lasers, mit dem die optische Messvorrichtung 1 gemäß den in Fig. 14A und 14B gezeigten Ausführungsbeispielen ausgestattet ist, ist Im Gegensatz zu den bisherigen Messsystemen im Beleuchtungslichtweg vor dem Strahlteiler ST eine Blende (Foucault-Schneide) angeordnet. Das Mikroskopobjektiv MO ist als Objektivoptik 00 ausgebildet. Wie in Fig. 14A und 14B gezeigt, wird die betrachtete Objektoberfläche über die Beleuchtungsblende BP, die Foucault-Schneide FS, die Objektivoptik OO und das Endoskop punktartig beleuchtet. Durch die Foucault-Schneide erfolgt die Beleuchtung aber nicht unter voller Ausnutzung der ganzen Querschnittsfläche der Objektivoptik OO, sondern nur über einen Ausschnitt, der vorzugsweise nicht symmetrisch zur optischen Achse ist. Die Detektion erfolgt über das Endoskop E, die Objektivoptik OO, den Strahlteiler ST, und eine weitere Optik L3 und den Bildaufnehmer BA, der mit mehreren Fotoelementen zur Flächenauflösung der auf ihm erzeugten Abbildung, z.B. CCD-Empfänger, Differenzdiode, ausgebildet ist. Die Abbildung des Objektes auf den Bildaufnehmer erfolgt dabei unter voller Ausnutzung der ganzen Querschnittsfläche der Objektivoptik. Durch eine solche Anordnung der Foucault-Schneide ergeben sich je nach Lage der Objektoberfläche zur Fokusebene unterschiedliche Intensitätsverteilungen auf dem Bildaufnehmer.

Ist der betrachtete Oberflächenbereich in der Fokusebene, so wird der Lichtpunkt der Oberfläche symmetrisch auf den Bildaufnehmer bzw. die Differenzdiode abgebildet. Liegt der betrachtete Oberflächenbereich dagegen außerhalb der Fokusebene, wird der Lichtpunkt assymetrisch abgebildet. Räumlich tritt in der Intensitätsverteilung eine Differenz auf. Aus der Differenz ist die Lage des Oberflächenbereiches bestimmbar.

Zur dreidimensionalen Messung wird auch hierbei die Objektoberfläche in der Tiefenachse (z-Achse) durch die Fokusebene gescannt. Entsprechend den Fig. 14A und 14B können zur Abastung in Tiefenrichtung das Objekt O, der Abschnitt der Messoptik mit der optischen Sonde und der Objektivoptik 00 oder nur die Objektivoptik OO bewegt werden.

Wird das Messobjekt O mit einem Lichtfleck beleuchtet, so muss es noch in xy-Richtung abgetastet werden, wofür aus dem Stand der Technik bekannte Vorgehensweisen, z.B. Strahlumlenkung mittels Schwingspiegel, relatives Verfahren des Objektes zum Messsystem in xy, etc., angewendet werden können.

## Patentansprüche

1. Optische Messvorrichtung (1) zur Formvermessung einer insbesondere rauhen Oberfläche eines Messobjekts (O), die eine mindestens eine Lichtquelle (LQ), eine Beleuchtungsoptik, eine Messoptik und mindestens eine Detektionseinheit mit einem Detektionselement umfassende Einrichtung aufweist, zur Erzeugung eines Fokus auf der Oberfläche, zur Abbildung des von der Oberfläche reflektierten Fokus mittels der Messoptik auf das Detektionselement und zur Bestimmung der Intensitätsverteilung des abgebildeten Fokus auf dem Detektionselement derart, dass die Intensitätsverteilung eine Abhängigkeit aufweist von der Fokuslage der Messoptik relativ zur Oberfläche und aus der Bestimmung einer oder mehrerer unterschiedilcher Intensitätsverteilungen die Lage oder Form des betrachteten Oberflächenbereiches über eine Signalauswertung bestimmbar ist,
**dadurch gekennzeichnet,**
**dass** die Messoptik eine optische Sonde zum Erzeugen mindestens eines Zwischenbildes (ZW) eines betrachteten Oberflächenbereichs aufweist.

2. Messvorrichtung nach Anspruch 1,
**dadurch gekennzeichnet,**
**dass** das Zwischenbild (ZW) oder mindestens eines der Zwischenbilder (ZW) im Objektstrahlengang erzeugt wird.

3. Messvorrichtung nach einem der Ansprüche 1 oder 2,
**dadurch gekennzeichnet,**
**dass** die optische Sonde (OS) objektseitig von einer Objektivoptik (OO) angeordnet ist.

4. Messvorrichtung nach einem der Ansprüche 1 oder 2,
**dadurch gekennzeichnet,**
**dass** die optische Sonde (OS) eine Optik aufweist, die als Mikroskopobjektiv (MO) ausgebildet ist.

5. Messvorrichtung nach einem der vorhergehenden Ansprüche,
**dadurch gekennzeichnet,**
**dass** eine Beleuchtungsblende (BP) vorgesehen ist und die optische Sonde (OS) die Beleuchtungsblende (BP) in ihrer Fokusebene (FE) abbildet.

6. Messvorrichtung nach einem der vorhergehenden Ansprüche,
**dadurch gekennzeichnet,**
**dass** sich im Objektstrahlengang eine bezüglich des Messobjekts (O) starre Optikeinheit (OST) befindet, der auf ihrer von dem Messobjekt (O) abgelegenen Seite eine bezüglich des Messobjektes (O) in Richtung ihrer optischen Achse bewegliche Optikeinheit (OBW) folgt.

7. Messvorrichtung nach Anspruch 6,
**dadurch gekennzeichnet,**
**dass** mittels der starren Optikeinheit (OST) ein zum Messobjekt (O) starres Zwischenbild (ZW) normal zur optischen Achse erzeugt wird und
**dass** die bewegliche Optikeinheit (OBW) in dem reflektierten Objektstrahl hinter dem starren Zwischenbild (ZW) angeordnet und zum Abtasten desselben ausgebildet ist.

8. Messvorrichtung nach Anspruch 6 oder 7,
**dadurch gekennzeichnet,**
**dass** die starre Optikeinheit (OST) wellenfrontverformende Elemente aufweist.

9. Messvorrichtung nach einem der Ansprüche 6 bis 8,
**dadurch gekennzeichnet,**
**dass** die starre Optikeinheit (OST) ganz oder teilweise als Endoskop (E) ausgebildet ist.

10. Messvorrichtung nach einem der Ansprüche 5 bis 9,
**dadurch gekennzeichnet,**
**dass** die starre Optikeinheit (OST) Teil einer das oder ein weiteres Zwischenbild (ZW) erzeugenden Optik ist.

11. Messvorrichtung nach einem der Ansprüche 6 bis 10,
**dadurch gekennzeichnet,**
**dass** die bewegliche Optikeinheit (OBW) ganz oder teilweise aus optischen Elementen besteht, die in Richtung der optischen Achse beweglich sind.

12. Messvorrichtung nach einem der Ansprüche 6 bis 11,
**dadurch gekennzeichnet,**
**dass** die bewegliche Optikeinheit (OBW) ganz außerhalb oder teilweise innerhalb und außerhalb oder ganz innerhalb des Objektlichtwegs liegt.

13. Messvorrichtung nach einem der Ansprüche 7 bis 12,
**dadurch gekennzeichnet,**
**dass** die Zwischenabbildungsvorrichtung für alle im starren Zwischenbild abgebildeten Objektpunkte den gleichen Abbildungsmaßstab besitzt.

14. Messvorrichtung nach einem der vorhergehenden Ansprüche,
**dadurch gekennzeichnet,**
**dass** die Zwischenabbildungsvorrichtung als telezentrische Abbildungsvorrichtung in 4F-Anordnung ausgebildet Ist.

15. Optische Messvorrichtung nach einem der vorhergehenden Ansprüche,
**dadurch gekennzeichnet,**
**dass** ein konfokales System von Blenden mit einer Beleuchtungsblende (BP) und einer Detektionsblende (DP) vorgesehen ist, die an optisch konjugierten Orten des Strahlengangs der Beleuchtungsoptik und der Detektionseinheit angeordnet sind,
**dass** in Abhängigkeit von der Fokuslage relativ zur Oberfläche unterschiedliche örtliche Intensitätsverteilungen auf dem Detektionselement entstehen, und
**dass** die Lage oder Form des betrachteten Oberflächenbereiches mittels einer Signalauswerteeinheit der Detektionseinheit aus den unterschiedlichen Intensitätsverteilungen bestimmbar ist.

16. Messvorrichtung nach Anspruch 15,
**dadurch gekennzeichnet,**
**dass** die optische Sonde (OS) auch die Detektionsblende (DP) in der Fokusebene (FE) abbildet.

17. Messvorrichtung nach einem der Ansprüche 1 bis 14,
**dadurch gekennzeichnet,**
**dass** die Detektionseinheit eine astigmatische Optik (AO) zum Erzeugen einer astigmatischen Abbildung der betrachteten Objektoberfläche auf der Empfängerfläche der Detektionseinheit aufweist,
**dass** die astigmatische Optik, (40) derart ausgebildet und angeordnet ist, dass in Abhängigkeit von der Fokuslage relativ zu der Objektoberfläche unterschiedliche örtliche Intensitätsverteilungen auf der Empfängerfläche entstehen, und
**dass** die Lage oder Form des betrachteten Oberflächenbereichs mittels einer Signalauswerteeinheit der Detektionseinheit aus den unterschiedlichen örtlichen Intensitätsverteilungen bestimmbar ist.

18. Messvorrichtung nach Anspruch 17,
**dadurch gekennzeichnet,**
**dass** die astigmatische Optik (AO) eine Zylinderlinse oder Toruslinse aufweist und die Empfängerfläche eine Vierquadranten-Photodiode oder ein Bildaufnehmer mit flächiger Anordnung von Bildaufnehmerelementen oder eine Bildaufnehmeranordnung aus mehreren Bildaufnehmerzeilen ist und dass die Anordnung von astigmatischer Optik (AO) und Empfängerfläche so ausgelegt ist, dass sich für eine vor dem betrachteten Oberflächenbereich liegende Fokusebene eine erste Orientierung der Intensitätsverteilung, hinter dem betrachteten Oberflächenbereich liegende Fokusebene eine zweite Orientierung der Intensitätsverteilung und in dem betrachteten Oberflächenbereich liegende Fokusebene eine ausgeglichene Intensitätsverteilung ergeben.

19. Messvorrichtung nach einem der vorhergehenden Ansprüche,
**dadurch gekennzeichnet,**
**dass** die optische Sonde (OS) mindestens zwei um eine Achse quer zur optischen Achse zueinander verschwenkbare oder quer zur optischen Achse zueinander verschiebbare und in einer Verschwenklage oder Verschiebeposition arretierbare Abschnitte aufweist.

20. Messvorrichtung nach einem der Ansprüche 1 bis 18,
**dadurch gekennzeichnet,**
**dass** die Messoptik eine Superpositionsoptik (SO) aufweist, durch die räumlich getrennte Oberflächenbereiche des Messobjekts (O) beleuchtet werden und in ein Bildfeld einer gemeinsamen Zwischenbildebene oder in Bildfelder unterschiedlicher Zwischenbildebenen als Zwischenbilder (ZW, ZW1, ZW2) abgebildet werden.

21. Messvorrichtung nach Anspruch 20,
**dadurch gekennzeichnet,**
**dass** die Superpositionsoptik (SO) aus verschiedenen einzelnen Linsensystemen besteht, die die räumlich getrennten Flächenbereiche entlang unterschiedlicher optischr Achsen und/oder unterschiedlicher optischer Weglängen in die gemeinsame Zwischenbildebene abbildet, oder
**dass** die Superpositionsoptik (SO) eine Multifokaloptik (MF) mit einer Linse mit mehreren Brennweiten entlang einer oder mehrerer optischer Achsen aufweist, die die räumlich getrennten Flächenbereiche in die gemeinsame Zwischenbildebene abbildet.

22. Messvorrichtung nach Anspruch 20,
**dadurch gekennzeichnet,**
**dass** mehrere Detektionseinheiten mit jeweils einer astigmatischen Optik (AO1, A02) und jeweils einem Bildaufnehmer (BA1, BA2) in abgestimmter unterschiedlicher Bildebene vorgesehen sind.

23. Messvorrichtung nach einem der Ansprüche 20 bis 22,
**dadurch gekennzeichnet,**
**dass** mehrere Beleuchtungslichtwege mit mehreren Beleuchtungsblenden (BP1, BP2) und/oder mit Licht unterschiedlicher Wellenlängen vorgesehen sind.

24. Messvorrichtung nach einem der Ansprüche 1 bis 18,
**dadurch gekennzeichnet,**
**dass** die Messoptik eine Bildebnungsoptik zum Erzeugen eines geebneten Zwischenbildes mindestens eines unebenen Oberflächenereichs aufweist.

25. Messvorrichtung nach Anspruch 24,
**dadurch gekennzeichnet,**
**dass** die Bildebnungsoptik als Rundsichtoptik (RO) ausgebildet ist zum Erfassen eines um 360° umlaufenden radialsymmetrischen Oberflächenbereiches.

26. Messvorrichtung nach einem der Ansprüche 3 bis 14 oder 19 bis 25,
**dadurch gekennzeichnet,**
**dass** der Beleuchtungslichtweg eine Blende (FS) enthält, die bewirkt, dass für die Beleuchtung des Objektes (O) nicht der gesamte Durchmesser der Objektivoptik (OO) durchstrahlt ist, jedoch bei der Abbildung des Objektes (O) auf die Empfängerfläche der Detektionseinheit der gesamte Durchmesser der Objektivoptik (OO) durchstrahlt wird,
**dass** die Blende (FS) dabei derart ausgebildet und angeordnet ist, dass in Abhängigkeit von der Fokuslage relativ zu der Objektoberfläche unterschiedliche örtliche Intensitätsverteilungen auf der Empfängerfläche entstehen, und
**dass** die Lage oder Form des betrachteten Oberflächenbereiches mittels einer Signalauswerteeinheit der Detektionseinheit aus den unterschiedlichen örtlichen Intensitätsverteilungen bestimmbar ist.

27. Messvorrichtung nach Anspruch 26,
**dadurch gekennzeichnet,**
**dass** die Blende als Foucault-Schneide (FS) ausgebildet ist.

28. Messvorrichtung nach Anspruch 26 oder 27,
**dadurch gekennzeichnet,**
**dass** die Empfängerfläche ein Bildaufnehmer mit flächiger Anordnung von Bildaufnehmerelementen, eine Vierquadranten-Photodiode oder eine Differenzdiode ist und
**dass** die Anordnung so ausgelegt ist, dass sich für eine vor dem betrachteten Oberflächenbereich liegende Fokusebene eine erste Orientierung der Intensitätsverteilung, hinter dem betrachteten Oberflächenbereich liegende Fokusebene eine zweite Orientierung der Intensitätsverteilung und in dem betrachteten Oberflächenbereich liegende Fokusebene eine ausgeglichene Intensitätsverteilung ergibt.

29. Messvorrichtung nach einem der vorhergehenden Ansprüche,
**dadurch gekennzeichnet,**
**dass** zur Bestimmung der Lage und Form des betrachteten Oberflächenbereiches eine relative Änderung der Lage der Fokusebene zur Objektoberfläche in z-Richtung durchgeführt wird entweder durch eine Bewegung des Messobjektes (0) relativ zur Messvorrichtung (1) oder durch eine Bewegung der Objektivoptik mit der optischen Sonde relativ zur Oberfläche oder durch eine Bewegung der Objektivoptik als bewegliche Optikeinheit (OBW) relativ zur Oberfläche und der optischen Sonde (OS) als starre Optikeinheit (OST).
